# EUROPEAN PATENT SPECIFICATION

(11) **EP 0 528 685 B1**
(45) Date of publication and mention of the grant of the patent: **08.07.1998**
(21) Application number: 92307573.3
(22) Date of filing: 19.08.1992
(51) Int. Cl.: G09G 3/36

(54) **A method of driving a ferroelectric liquid crystal display**
Verfahren zum Steuern einer ferroelektrischen Flüssigkristall- Anzeigevorrichtung
Méthode de commande d'un dispositif d'affichage à cristal liquide ferroélectrique

(30) Priority: 20.08.1991 JP 208088/91
(43) Date of publication of application: 24.02.1993
(73) Proprietor: SHARP KABUSHIKI KAISHA, Osaka (JP)
(72) Inventor: Koden, Mitsu hiro, Nara-ken, Nara-shi (JP)
(74) Representative: White, Martin David

(56) References cited:
- EP-A- 0 176 763
- EP-A- 0 448 032
- EP-A- 0 448 105

## Description

### BACKGROUND OF THE INVENTION

### 1. Field of the Invention

The present invention relates to a ferroelectric liquid crystal display device and more particularly, to a liquid crystal display device combining a switching device and a ferroelectric liquid crystal.

### 2. Description of the Related Art

A liquid crystal display device is largely used in a watch, an electronic calculator, a word processor, a personal computer, a pocket television or the like. Recently, a display device of high quality which is capable of large- area displaying has been especially demanded. For such a display device of high quality, it is known to use a liquid crystal display device, which is formed by combining an active matrix substrate on which a thin film transistor (TFT) is arranged in the form of matrix with a twisted nematic (TN) liquid crystal.

However, a serious defect of the liquid crystal display device is that its visual angle is narrow. This problem is peculiar to the TN display. Therefore, as long as this display method is used, the defect can not be really improved. In addition, there is a strong demand for decreasing a driving voltage in respect of economical aspect.

Meanwhile, a visual angle is wide in a ferroelectric liquid crystal. Since the ferroelectric liquid crystal does not have a clear threshold value, if a pulse width for switching is increased, the driving voltage can be decreased theoretically. However, there is the following defect in the normal ferroelectric liquid crystal display device, high contrast is not likely to be obtained because of molecular fluctuation due to a bias voltage.

Thus, it is proposed that the ferroelectric liquid crystal is combined with the active matrix substrate in order to implement a liquid crystal display device in which the visual angle is wide, the driving voltage is low, and the contrast is high.

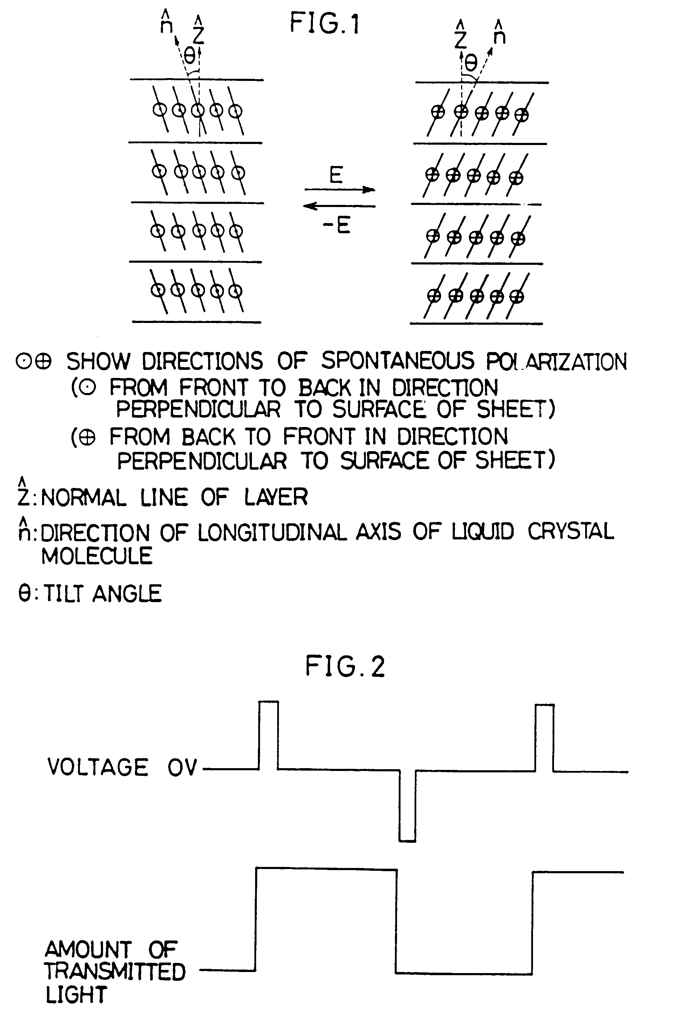

The ferroelectric liquid crystal display device (Appl. Phys. Lett., 36, 899 (1980); Japanese Opened Patent No. 107216/1981; U.S. Patent 4367924) uses a ferroelectric liquid crystal such as a chiral smectic C phase, a chiral smectic F phase or a chiral smectic I phase. Although the ferroelectric liquid crystal has a helical structure, it is found that the helical structure is broken if the ferroelectric liquid crystal is sandwiched between liquid crystal cells having a cell thickness thinner than its helical pitch. Actually, as shown in Fig. 1, it is found that a region where a liquid crystal molecule is inclined from a normal line of a smectic layer by an angle of θ to be stable and a region where it is inclined in the opposite direction by an angle of θ to be stable can exist together. When an electric field is applied in the direction perpendicular to the surface of Fig. 1, the directions of the liquid crystal molecule and its spontaneous polarization can be uniformly arranged. Therefore, two states can be switched by changing the polarity of the electric field to be applied. Since bireferegent light is changed in the ferroelectric liquid crystal in the cell through the switching operation, transmitted light can be controlled by putting the ferroelectric liquid crystal display device between two polarizers. In addition, even if application of the voltage stops, since the orientation of the liquid crystal molecule is maintained at a state before the voltage is applied by orientation controlling force of an interface, a memory effect can be also obtained. In addition, in regard to a time required for driving the switching operation, a high-speed response of an order of µsec can be obtained since the spontaneous polarization of the liquid crystal and the electric field directly act thereon.

Fig. 2 shows the relation between an applied voltage waveform in the ferroelectric liquid crystal display device in which the direction of the polarization axis of polarizing plates crossing at right angles with each other coincides with the direction of longitudinal axis of the molecule at one state of bistable states of the ferroelectric liquid crystal display device, and an amount of the transmitted light. Since the ferroelectric liquid crystal display device has a memory characteristic, preferable switching between two values can be implemented by applying a short pulse and maintaining an electroless state thereafter.

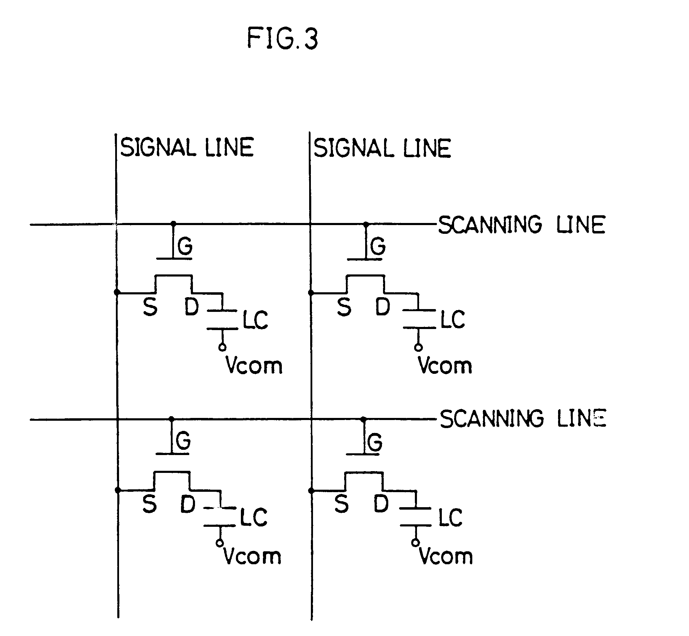

Next, the active matrix substrate will be described. Fig. 3 shows an equivalent circuit of an active matrix type liquid crystal display device using a thin film transistor (TFT) which is a typical 3-terminal type device.

Referring to Fig. 3, reference character G designates a gate electrode, reference character S designates a source electrode, reference character D designates a drain electrode, reference character V_{com} designates a common electrode, and reference character LC designates a liquid crystal capacity. When the liquid crystal is driven, an electric field is applied to the gate electrode by applying a signal from a scanning line and then the TFT turns ON. In synchronization with this, when a signal is applied to the source electrode from a signal line, an electric charge is stored in the liquid crystal capacity through the drain electrode. Thus, the liquid crystal responds by the thus generated electric field.

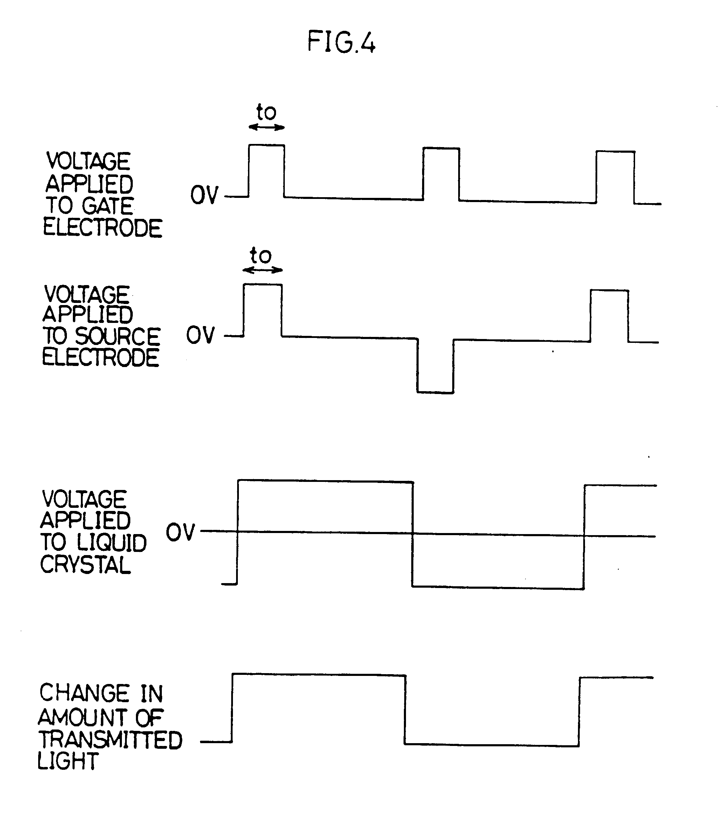

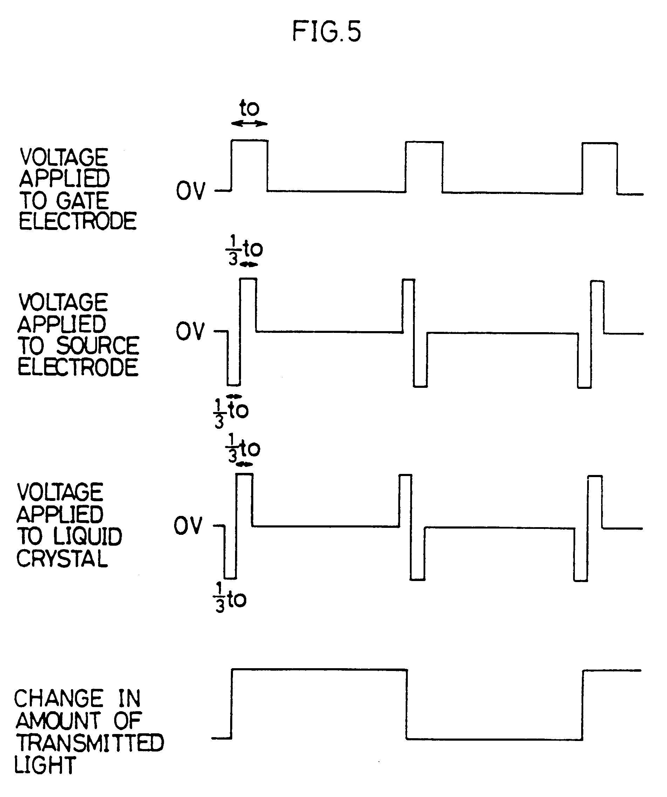

In a case where the ferroelectric liquid crystal is employed to the active matrix type liquid crystal display, driving waveforms shown in Figs. 4 and 5 are used.

However, according to the driving method shown in Fig. 4, for example, when display at a certain pixel is not changed for a long period of time, a voltage of the same polarity is applied to the ferroelectric liquid crystal of that pixel. This is a considerably big problem in view of reliability and it is almost impossible to manufacture a practical display device.

Meanwhile, according to the driving method shown in Fig. 5, the voltage applied to each pixel is not partial to minus nor plus, so that the method is thought preferable in view of reliability. However, the following problem is generated in view of a practical display device. That is, a pulse width required for switching the typical ferroelectric liquid crystal is approximately 100µsec at a room temperature when the voltage is 10V. Although a more high-speed ferroelectric liquid crystal has been reported, generally it is necessary to increase the spontaneous polarization of the ferroelectric liquid crystal in order to increase the switching speed of the display formed of a liquid crystal material. However, as the spontaneous polarization is increased, it is difficult to obtain preferable bistable switching operation. Since the driving voltage of the liquid crystal display device driven by the TFT is approximately 5V, when it is assumed that the driving voltage is 5V and the pulse width necessary for the switching is 200µsec, in the driving waveforms shown in Fig. 5, a writing time per scanning line is 600µsec. When the liquid crystal display device having 1000 scanning lines is implemented, a time required for rewriting one screen is 600msec.

EP-A-0 448 105, which is prior art under Article 54(3) EPC, discloses a method of driving an active matrix liquid crystal display device, in which a given number of pixel lines (by concurrent application of gate and drive signals to the scanning and signal electrodes) are first reset in sequence, then written in sequence, and finally set to zero in sequence.

EP-A-0 176 763 discloses a method of driving an active matrix ferro-electric liquid crystal display device. When the switching element corresponding to a pixel is switched ON two voltage pulses are applied in succession to the pixel. The first pulse does not switch the state of the ferro-electric liquid crystal, but the second pulse does.

The present invention provides a method of driving a ferroelectric liquid crystal display device, the device comprising a substrate; a plurality of scanning electrodes and a plurality of signal electrodes disposed in the form of a matrix, a pixel being defined at each intersection of a scanning electrode and a signal electrode; a switching device at each intersection of the electrodes for driving an associated pixel; a liquid crystal cell containing ferroelectric liquid crystal, the ferroelectric liquid crystal forming a liquid crystal layer of a chevron structure showing uniform orientation in which doglegged direction in the chevron structures is the same as a rubbing axis; and a drive control means; the method comprising the steps as indicated in claim 1.
Fig. 1 is a schematic view for describing switching operation of a ferroelectric liquid crystal display device;
Fig. 2 is a view showing the relation between an applied voltage in the ferroelectric liquid crystal display device and an amount of transmitted light, and their respective changes with the passage of time;
Fig. 3 is a view showing an equivalent circuit of an active matrix type liquid crystal display device;
Fig. 4 is a view showing a conventional method of driving the active matrix type ferroelectric liquid crystal display device;
Fig. 5 is a view showing another conventional method of driving the active matrix type ferroelectric liquid crystal display device;
Fig. 6 is a schematic view showing a display of an active matrix type ferroelectric liquid crystal display device of the present invention;
Fig. 7 is a view showing a driving method of the present invention;
Fig. 8 is a view also showing a driving method of the present invention;
Fig. 9 is a view showing a voltage waveform applied to each pixel in the active matrix type ferroelectric liquid crystal display device of the present invention;
Fig. 10 is a sectional view showing a structure of the active matrix type ferroelectric liquid crystal display device of the present invention; and
Fig. 11 is a view showing an example of orientation of a ferroelectric liquid crystal.

### DETAILED DESCRIPTION OF THE PREFERRED EMBODIMENTS

The present invention provides an active matrix type ferroelectric liquid crystal display device in which a capacity is large, a visual angle is large, a driving voltage is low, and a high contrast can be driven.

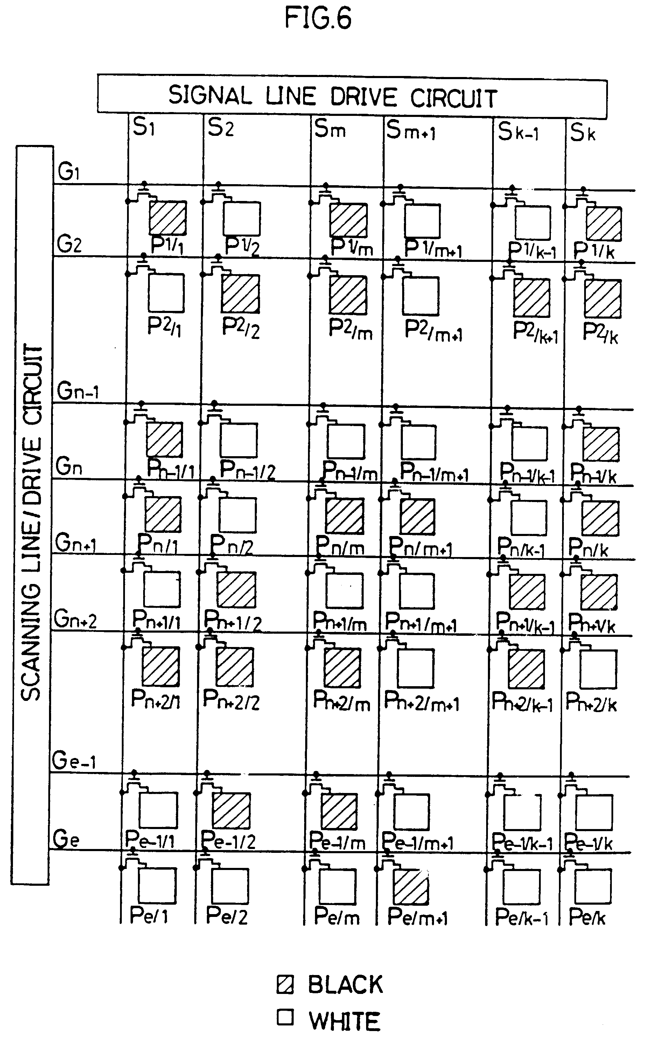

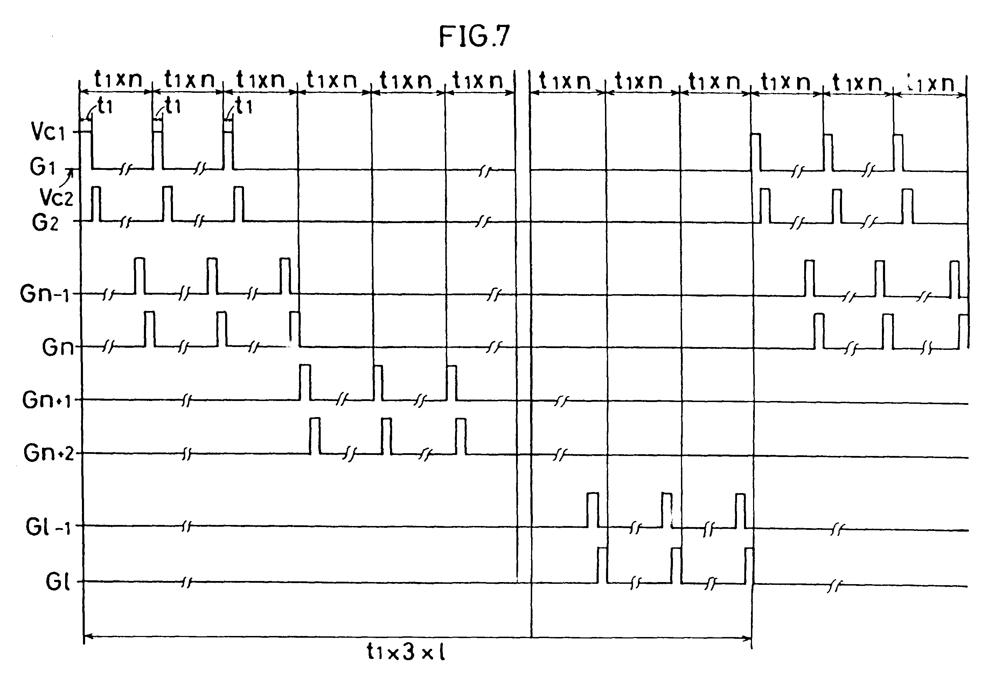

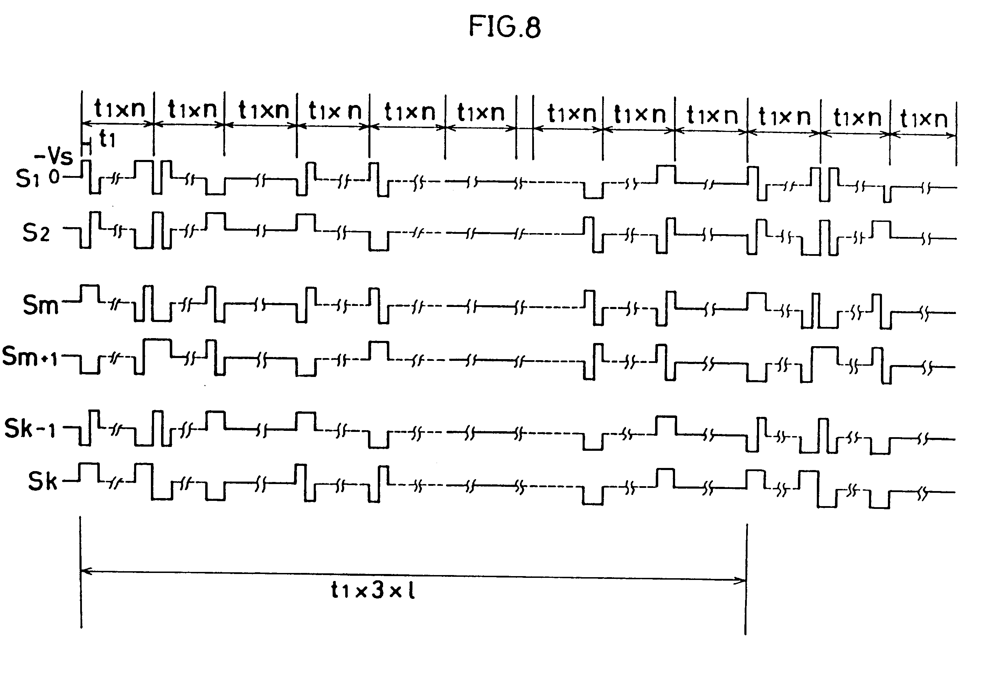

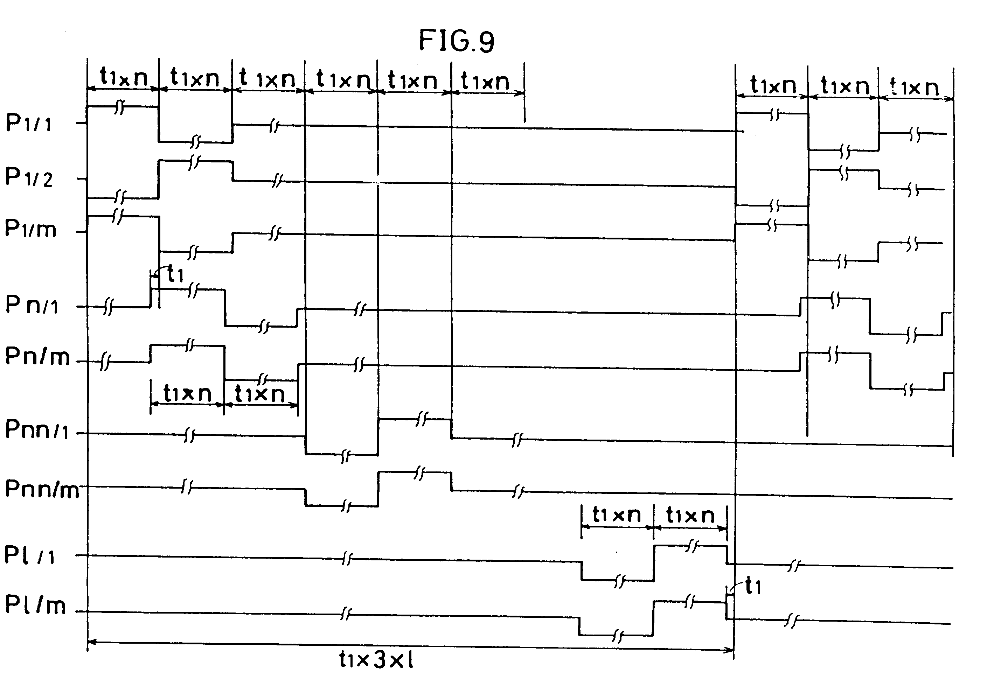

Drive control of the ferroelectric liquid crystal display device of the present invention will be described using a liquid crystal display device in which a ferroelectric liquid crystal is combined with an active matrix substrate on which l scanning electrodes G₁, G₂, ... Gₙ₋₁, Gₙ, Gₙ₊₁, Gₙ₊₂, ..., Gₙ₋ₗ and Gₗ and k signal electrodes S₁, S₂, ···, Sₘ, Sₘ₊₁, ···, Sₖ₋₁ and Sₖ are arranged in the form of a matrix, and the TFT is arranged at a point of intersection thereof. A gate electrode of the TFT at each intersecting point is connected to a scanning electrode and a source electrode thereof is connected to a signal electrode. P_{1/1}, P_{1/2}, ···, P_{1/m}, P_{1/m+1}, P_{n/1,} P_{n/2}, ..., P_{n/m}, P_{n/m+1}, ... designate pixels each connected to the drain electrode of the TFT formed at each intersecting point. When pixels are displayed as shown in Fig. 6, signal waveforms shown in Figs. 7 and 8 are sent to each scanning electrode and a signal electrode. At this time, voltage waveforms applied to the pixels are as shown in Fig. 9. Pclarizing plates are arranged so that white may be displayed when a plus voltage is applied to the ferroelectric liquid crystal and black may be displayed when a minus voltage is applied thereto.

First, a signal is applied from the scanning electrode G₁ for a time of t₁ to turn the TFT ON. In synchronization with this, a negative voltage -V₀ is applied from the signal electrode connected to the pixels P_{1/2}, P_{1/m+1} and P1/k-1 which are displayed as white among pixels connected to G₁. Contrarily, a positive voltage V₀ is applied from the signal electrodes connected to the pixels P_{1/1}, P_{1/m} and P_{1/k} which are displayed as black among the pixels connected to G₁. Then, for the next time of t₁, a signal is applied from G₂ to turn TFT ON and in synchronization with this, a signal is applied from the signal electrode. Thus, the TFT's connected to the scanning electrodes G₁ to Gₙ are sequentially turned ON in the same manner as described above.

After the signal is applied from the n'th scanning electrode, a signal is applied from the scanning electrode G₁ again for the time of t₁ to turn the TFT ON. In synchronization with this, the positive voltage V₀ is applied from the signal electrodes connected to the pixels P_{1/2}, P_{1/m+1} and P1/k-1 which are displayed as white among pixels connected to G₁. Contrarily, the negative voltage -V₀ is applied from the signal electrodes connected to the pixels P_{1/1}, P_{1/m} and P_{1/k} which are displayed as black among the pixels connected to G₁. Then, for the next time of t₁, a signal is applied from the G₂ to turn the TFT ON and in synchronization with this, a signal is applied from the signal electrode. Thus, the TFT's connected to the scanning electrodes G₁ to Gₙ are sequentially turned on in the same manner as described above.

After the signal is applied from the n'th scanning electrode again, a signal is applied from the scanning electrode G₁ again for the time of t₁ to turn the TFT ON. In synchronization with this, a voltage of 0V is applied from the signal electrode. In the same manner, the TFT's connected to the scanning electrodes G₁ to Gₙ are sequentially turned ON and in synchronization with this, then a voltage of 0V is applied from the signal electrode.

Then, the same scanning is performed by the scanning electrodes of Gₙ₊₁ to Gₙ₊ₙ and then also to G₁ in the same manner.

As described above, the switching device is turned on three times to write the display contents once, which is a specific character of the driving method of the present invention. At this time, the waveform applied to each pixel is not partial to plus nor minus as shown in Fig. 9, which is preferable in respect of reliability.

Although a value of Vₛ varies with specification of an LSI for driving the liquid crystal display device, for example, 5V may be used. The time t₁ is a time required for giving a charge of electricity necessary for obtaining a voltage of Vₛ by the TFT to electrodes sandwiched by the liquid crystal, which may be 25µsec, for example. Since the pulse width applied to the liquid crystal is t₁ x n, it is necessary to determine n so that the sufficient time for switching the ferroelectric liquid crystal may be t₁ x n when the voltage of Vₛ is applied. For example, if it is assumed that the sufficient time for switching the ferroelectric liquid crystal is 200µsec and t₁ = 25µsec when the voltage of 5V is applied, n is set at 8. Therefore, in this case, in order to rewrite one screen, a time of t₁ x 3 x 1 is necessary. In the case where a method in which the screen is periodically rewritten is used, t₁ x 3 x 1 is preferably 16.6msec or less so that flicker may not be generated. Therefore, when t₁ = 25µsec, the number of 1 is 221 or less. Meanwhile, in a case where a method of partially rewriting is used, even t₁ x 3 x 1 is 100msec or more, since a display of high quality can be obtained at sufficiently high speed, the number of l can be 1000 or more. When 1 = 1000 and t₁ = 25µsec, the time for rewriting one screen is 75msec, which is a sufficiently high-speed display. By using this driving method, even if response speed of the liquid crystal is low, the time required for rewriting one screen is not theoretically increased.

The driving method of the present invention can be applied to a partially rewriting method which applies a signal to only a part where the display contents need to be rewritten in the screen. In this case, a signal is only applied to the scanning electrodes and the signal electrodes connected to the pixels where the display contents need to be rewritten.

In addition, it is possible to adjust a voltage applied to the ferroelectric liquid crystal by applying a voltage to a counter electrode V_{com}.

As a switching device provided at each intersecting point of the scanning electrode and the signal electrode, although there are various devices, such as TFT using a-Si or poly-Si, laddic device, plasma address type device, the TFT using a-Si or poly-Si is preferable among them.

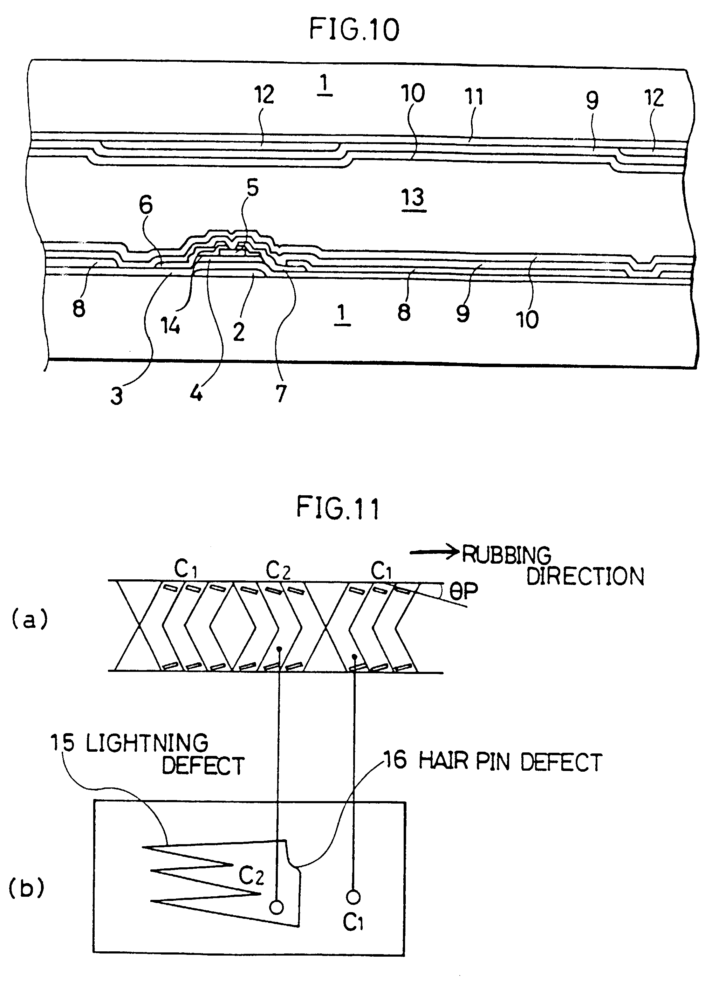

Fig. 10 is a sectional view showing an example of a liquid crystal display device of the present invention in which an active matrix substrate using a-Si TFT is combined with the ferroelectric liquid crystal. Referring to Fig. 10, reference numeral 1 designates a substrate, reference numeral 2 designates a gate electrode, reference numeral 3 designates a gate insulating film, reference numeral 4 designates an a-Si semiconductor film, reference numeral 14 designates an n⁺-a-Si film doped with phosphorus, reference numeral 5 designates an insulating film, reference numeral 6 designates a source electrode, reference numeral 7 designates a drain electrode, reference numeral 8 designates a pixel electrode, reference numeral 9 designates an insulating film, reference numeral 10 designates an orientation film, reference numeral 11 designates a common electrode, reference numeral 12 designates an obscure film, and reference numeral 13 designates a ferroelectric liquid crystal. Although the obscure film 12 is not always necessary, it serves as a black matrix which shields light at a part except for the pixel and functions to prevent the ferroelectric liquid crystal from converting when the electric field becomes zero. Uniaxial orientation processing is performed onto at least one of orientation films 10 on the substrates. Although Fig. 9 shows an example of a device for black-and-white display, it is needless to say that color display is possible by forming a color filter on the substrate.

A ferroelectric liquid crystal material and a device structure capable of implementing high contrast are preferably used in the present invention. Next, as a preferable example of a ferroelectric liquid crystal forming a liquid crystal having a chevron structure of uniform orientation in which the doglegged direction corresponds to the rubbing axis as in the present invention, a liquid crystal will be described, in which directions of the uniaxial orientation processing of a pair of substrates are parallel, a liquid crystal phase to be driven is a chiral smectic C phase, the smectic layer structure of the chiral smectic C phase is a chevron structure which is bent like a dogleg, and its orientation is uniform C1 orientation (C1U orientation).

Generally, the chiral smectic C layer has a doglegged structure, that is, the chevron structure as shown in Fig. 11(a). As can be seen from the figure, there are two doglegged directions in the layer. There is generated an orientation defect called a zigzag defect at the doglegged part in the layer. Fig. 11(b) shows a schematic view of the zigzag defect observed by a polarization microscope. The zigzag defect is classified into a defect called a lightning defect and a defect called a hair pin defect. It has been found by study that a part of <<>> in the layer corresponds to the lightning defect and a part of >><< in the layer corresponds to the hair pin defect (N. Hiji et al., Jpn. J. Appl. Phys., 27, L1 (1988)). Fig. 11a shows the relation between the rubbing direction and the pretilt angle θₚ. The two orientations are called C1 orientation and C2 orientation, in reference to the rubbing direction . A case where the doglegged direction is the same as a rubbing axis defined as C1 orientation (chevron 1) and the opposite case is defined as C2 orientation (chevron 2).

As the pretilt angle θₚ is increased, the difference between orientation states of the liquid crystal molecules of the C1 orientation and C2 orientation becomes conspicuous. When the orientation film showing a large value of 8° or more (normally 8 to 30°) is used, a region showing a definite quenching and a region not showing the quenching are observed in the C1 orientation on the side of high temperature, and only a region showing the definite quenching is observed in the C2 orientation on the side of low temperature. Since uniform orientation and twist orientation are generally sorted by an existence of the quenching ( "Structure and Physical Properties of Ferroelectric Liquid Crystal" by Fukuda and Takezoe, Corona Co., Ltd., 1990, pp. 327), it is assumed that the C1 orientation showing the quenching is called C1U (C1 uniform) orientation and the C1 orientation not showing the quenching is called C1T (C1 twist) orientation. Since there is provided only one kind of orientation as for the C2 orientation, it is just defined as the C2 orientation. When the voltage waveform shown in Fig. 2 is applied, while preferable contrast can be obtained in the C1U orientation and the C2 orientation, only low contrast is obtained in the C1T. Since the inventors of the present invention have found that there are the following tendency in the contrast, the C1U orientation is especially preferable in respect of the contrast.$\text{C1U > C2 >> C1T}$

When the pretilt angle θₚ is not so large, the difference between the contrasts of the C1U orientation and C2 orientation is not so large. The C1U orientation and C2 orientation can be used in the device of the present invention regardless of the value of the angle θₚ.

### EXAMPLE

### Example 1

Liquid crystal composite materials No. 201 to 203 shown in table 3 were made using compounds No. 101 to 128 shown below. The above liquid crystal composite materials showed the smectic C phase in the room temperature. A phase transition temperature of the composite materials are shown in tables 1 and 2. According to tables 1 and 2, reference character C designates a crystal phase, reference character S_{X} designates a smectic X phase, reference character S_{C} designates a smectic C phase, reference character S_{A} designates a smectic A phase, and reference character I designates an isotropic liquid phase.

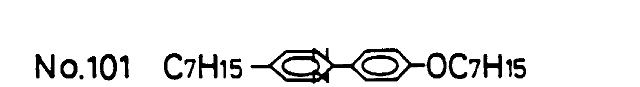

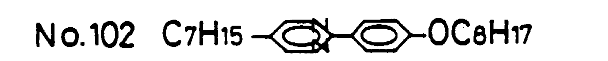

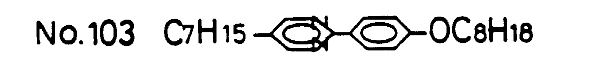

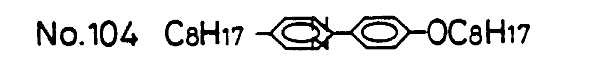

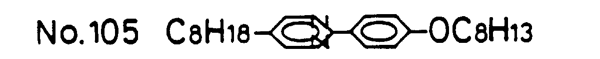

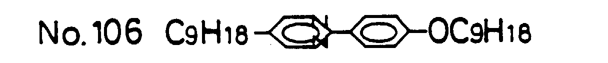

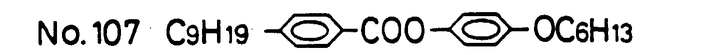

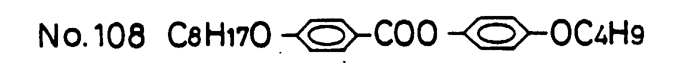

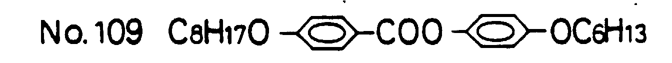

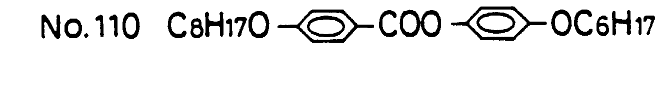

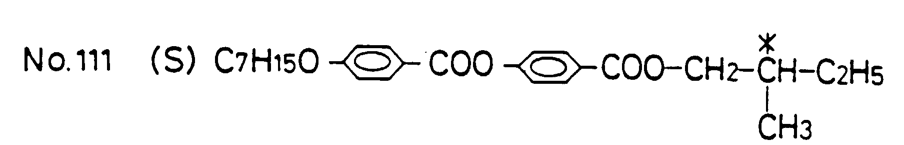

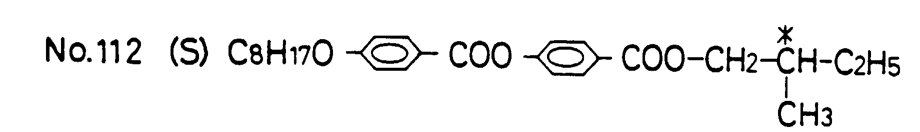

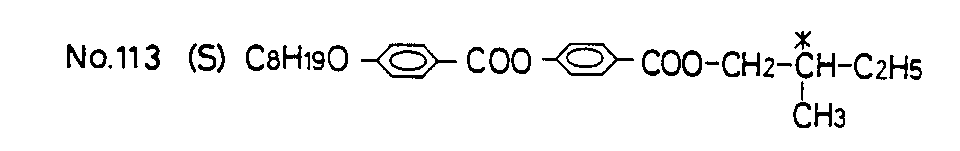

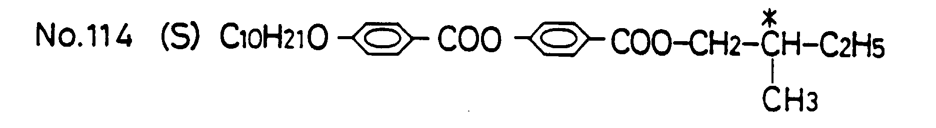

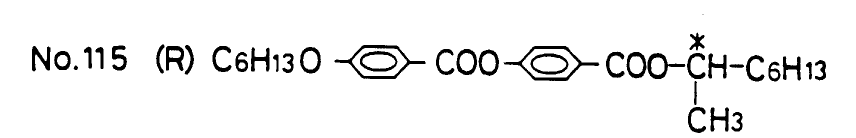

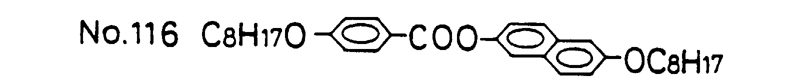

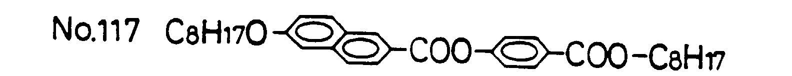

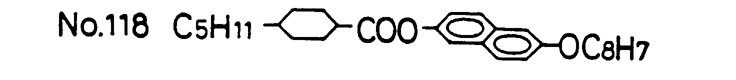

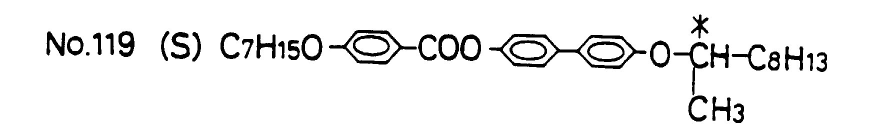

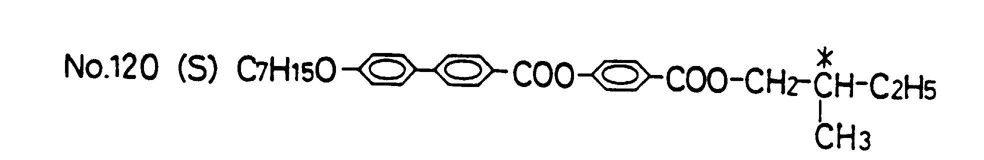

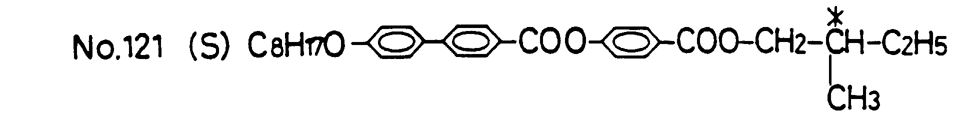

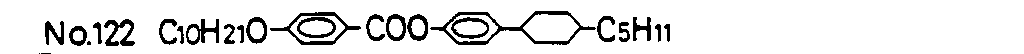

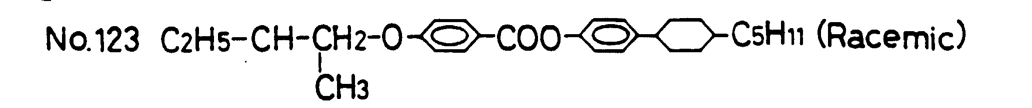

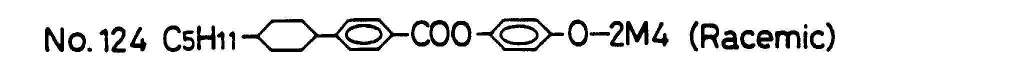

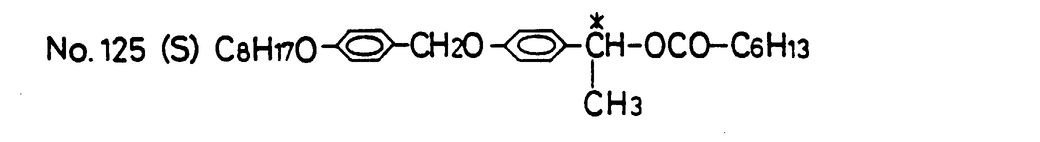

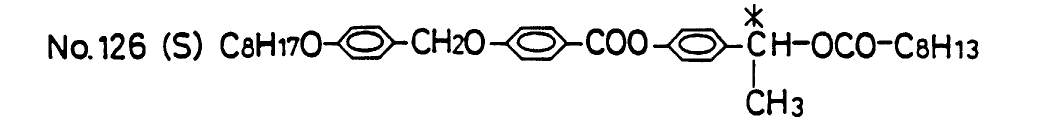

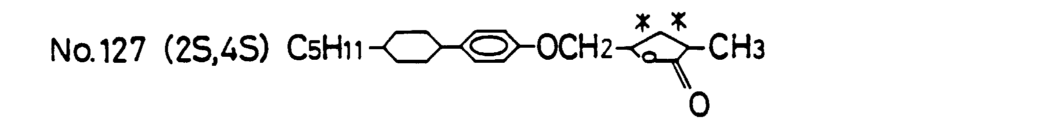

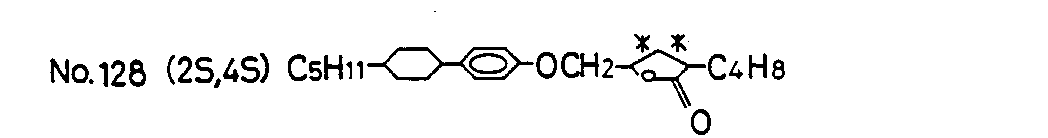

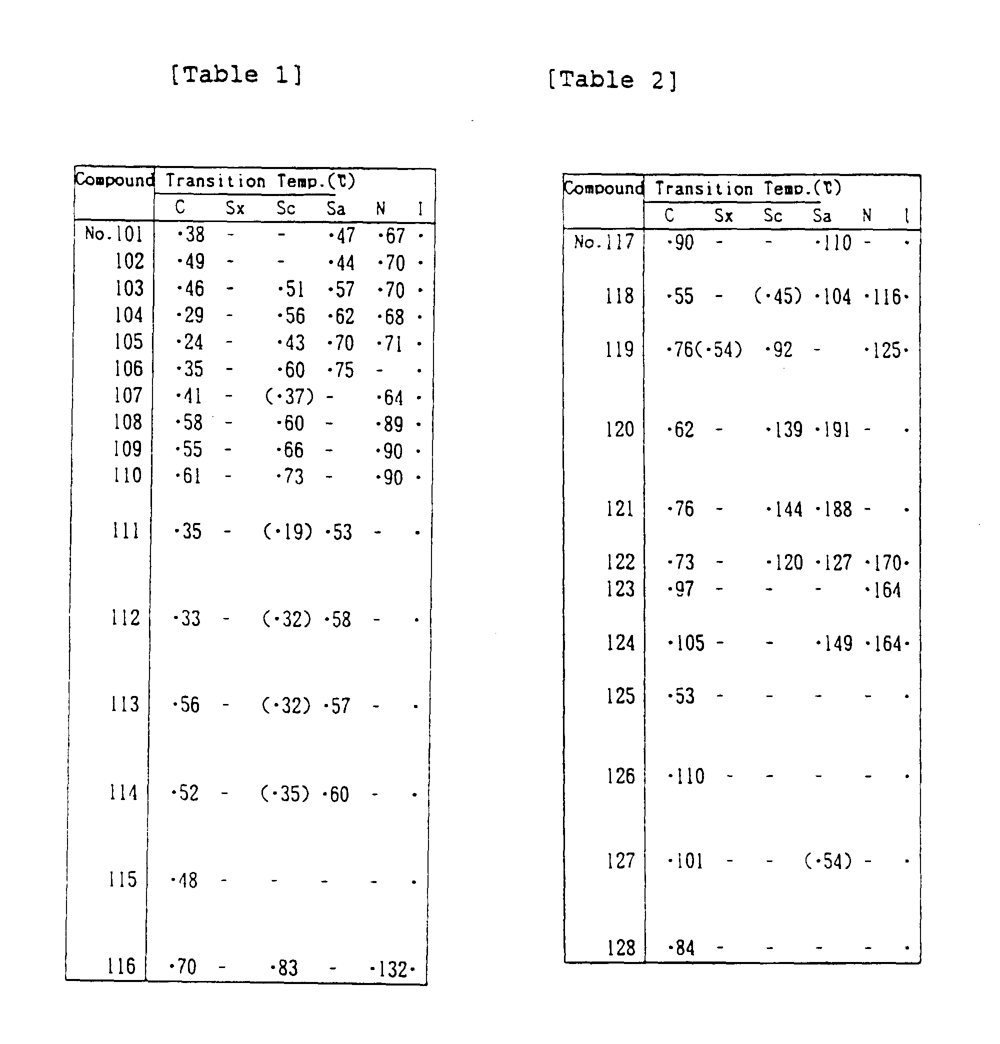

An ITO film was formed on two glass substrates, a polyimide orientation film (LX-1400 made by Hitachi Chemical Co., Ltd.) was applied thereon and then it was rubbed. Then, two substrates were put together to have a cell thickness of 2µm so that the rubbing directions may be the same, and then the ferroelectric liquid crystal composite materials shown in table 3 were injected thereto. Thereafter, the cell was heated once until the liquid crystal composite materials were changed to anisotropic liquid, and then they were cooled down to the room temperature at 1°C/min, whereby the ferroelectric liquid crystal display device having preferable orientation was obtained. The ferroelectric liquid crystal display device was put between polarizing plates crossing at right angles, and then response speed, a tilt angle, a memory angle, and a memory pulse width thereof was measured, which results are shown in table 4. The response speed was obtained from a time when a rectangular wave voltage (V = ±10V) is applied at 25°C until the amounts of transmitted light change from 0 to 50%, from 0 to 90%, and from 10 to 90%. The tilt angle was defined as 1/2 of an angle formed by two quenching positions obtained when the rectangular wave voltage was applied to the cell. The memory angle was defined as an angle formed by the two quenching positions obtained when the electric field was not applied to the cell. The memory pulse width was defined as the minimum value capable of switching by applying a pulse waveform voltage (V = ±10V) at 25°C.

**[ Table 3 ]**

| Compound | Composite No.201 | Composite No.202 | Composite No.203 |
|---|---|---|---|
| No.101 | | 10.0 | |
| 102 | | 5.0 | |
| 102 | | 16.0 | |
| 104 | | 10.0 | |
| 105 | | 13.0 | |
| 106 | | 44.0 | |
| 107 | | | 24.9 |
| 108 | | | 12.2 |
| 109 | | | 12.5 |
| 110 | | | 11.9 |
| 111 | 9.4 | | |
| 112 | 29.4 | | |
| 113 | 10.6 | | |
| 114 | 9.5 | | |
| 115 | | | 1.4 |
| 116 | | | 4.7 |
| 117 | 4.8 | | 3.4 |
| 118 | | | 4.8 |
| 119 | | | 1.2 |
| 120 | 19.4 | | |
| 121 | 14.9 | | |
| 122 | | | 8.0 |
| 123 | | | 6.4 |
| 124 | | | 6.4 |
| 125 | | | 1.2 |
| 126 | | | 1.0 |
| 127 | | 2.0 | |
| 128 | 2.0 | | |

**[ Table 4 ]**

| Comp. | Transition Temp.(°C) | | | | Response-Speed(µsec) | | | | | |
|---|---|---|---|---|---|---|---|---|---|---|
| | Sc | Sa | N | I | 0→50% | 0→90% | 10→90% | Tilt Angle (deg) | Memory Angle (deg) | Memory pulse width (µsec) |
| No.201 | ·40 | ·95 | - | · | 172 | 254 | 154 | 15 | 9 | 180 |
| 202 | ·44 | ·68 | ·70 | · | 111 | 175 | 114 | 11 | 9 | 100 |
| 203 | ·42 | ·75 | ·91 | · | 426 | 875 | 650 | 19 | 10 | 350 |

### Example 2

An ITO film having a thickness of 1000Å was formed on two glass substrates and then SiO₂ insulating film having a thickness of 500Å was formed thereon. Then, the orientation film shown in table 4 was formed thereon with a thickness of 400Å by spin coating and then the uniaxial orientation processing by rubbing was performed using a rayon cloth.

Then, the substrates were put together so as to be 20µm in thickness so that the rubbing directions may not be in parallel, and thus a liquid crystal cell was manufactured. Then, nematic liquid crystal E-8 made by Merrk Co., Ltd. was injected thereto and the pretilt angle formed by the liquid crystal molecule and the substrate was measured by a magnetic field capacity method. The result thereof are shown in table 5.

**[ Table 5 ]**

| Orientation Film | Pretilt Angle |
|---|---|
| PSI-X-A-2001(Chisso Petrochemical Co., Ltd.) | 12~15° |
| PSI-X-S-014(Chisso Petrochemical Co., Ltd.) | 1~2° |
| PVA | 0~5° |

### Example 3

The active matrix type ferroelectric liquid crystal display device of the structure shown in Fig. 10 was formed by the following process. First, a Ta film was formed on a substrate made of glass by sputtering and patterned to be of a predetermined configuration, and then 64 gate electrodes 2 were formed. Then, a gate insulating film (SiNx film) 3, an a-Si semiconductor film 4, a gate insulating film (SiNx film) 5 were sequentially laminated by plasma CVD in a vacuum and then the insulating film 5 was patterned to be of a predetermined configuration. Then, an n⁺-a-Si film 14 doped with phosphorus was formed by plasma CVD and then the n⁺-a-Si film and the a-Si semiconductor film 4 were patterned. Then, a Ti film was formed by sputtering and the Ti film and the n⁺-a-Si film 14 were patterned to be of a predetermined configuration, and then 64 source electrodes 6 and drain electrodes 7 were formed. The ITO film was formed by sputtering and then patterned, and a pixel electrode 8 was formed.

The ITO film serving as a common electrode 11 was formed on another substrate by sputtering and then an Mo film serving as an obscure film 12 was formed thereon by sputtering. Then, the Mo film was patterned to be of a predetermined configuration.

The SiO₂ insulating films having a thickness of 500Å were formed on the thus formed two substrates. Then, PSI-X-A-2001 (Polyimide made by Chisso Petrochemical Co., Ltd.) serving as the orientation film was formed by spin coating with a thickness of 400Å. Then, the uniaxial orientation processing by rubbing was performed using a rayon cloth. Then, these two substrates were put together by a sealing material made of epoxy resin with the space of 2µm through a silica spacer so that those rubbing directions may almost coincide with each other. Then, the ferroelectric liquid crystal composite material No. 201 made in the embodiment 1 was injected from an inlet by a vacuum injection method and then the inlet was cured with an acrylic resin of UV curing type. Thus, a liquid crystal cell was formed. In addition, polarizing plates whose polarizing axes cross almost at right angles were disposed above and below the cell such that one polarizing axis of the polarizing plate may coincide with either one of optical axes of the liquid crystal of the cell, and thus the liquid crystal display device was provided.

It was found that the orientation of the ferroelectric liquid crystal display device was the C1U orientation except a region of the C2 orientation surrounded by a small zigzag defect in a temperature range from a transition point of smectic C-smectic A to the room temperature.

The ferroelectric liquid crystal display device was driven by the driving methods shown in Figs. 7 and 8. More specifically, it was driven at 25°C under the condition that V_{G1} = 10V, V_{G2} = -15V, Vₛ = 5V, t₁ = 25µsec, and n = 20, and then there was provided a preferable display whose rewriting time for one screen was 4.8msec.

### Example 4

An active matrix type ferroelectric liquid crystal display device of a structure shown in Fig. 10 was made in the same manner as in the example 3 except that the liquid crystal composite material No. 201 in the example 3 was changed to the liquid crystal composite material No. 202.

It was found that the orientation of the ferroelectric liquid crystal display device was the C1U orientation except a region of the C2 orientation surrounded by the small zigzag defect in a temperature range from a transition point of smectic C-smectic A to the room temperature.

The ferroelectric liquid crystal display device was driven by the driving methods shown in Figs. 7 and 8. More specifically, it was driven using various values of n at 25°C under the condition that V_{G1} = 10V, V_{G2} = -15V, Vₛ = 5V and t₁ = 25µsec. However, in this case, there was not pro vided bistable switching. Meanwhile, it could be driven at 33°C or more, for example, when it was driven at 35°C under the condition that V_{G1} = 10V, V_{G2} = -15V, Vₛ = 5V, t₁ = 25µsec, and n = 5, then there was provided a preferable display whose rewriting time for one screen was 4.8msec.

### Example 5

An active matrix type ferroelectric liquid crystal display device of the structure shown in Fig. 10 was made in the same manner as in the example 3 except that the liquid crystal composite material No. 201 was changed to the liquid crystal composite material No. 202 and the orientation PSI -X-A-2001 (Polyimide made by Chisso Petrochemical Co., Ltd.) was changed to PSI-X-S-014 (polyimide made by Chisso Petrochemical Co., Ltd.).

It was found that the orientation of the ferroelectric liquid crystal display device was the C2 orientation at the room temperature except a region of the C1 orientation surrounded by a small zigzag defect.

The ferroelectric liquid crystal display device was driven by the driving methods shown in Figs. 7 and 8. More specifically, it was driven at 25°C under the condition that V_{G1} = 10V, V_{G2} = -15V, Vₛ = 5V, t₁ = 25µsec, and n = 32, and then there was provided a preferable display whose rewriting time for one screen was 4.8msec.

### Example 6

An active matrix type ferroelectric liquid crystal display device of the structure shown in Fig. 10 was made in the same manner as in the example 3 except that the liquid crystal composition material No. 201 in the example 3 was changed to the liquid crystal composite material No. 203.

It was found that the orientation of the ferroelectric liquid crystal display device was the C2 orientation at the room temperature except a region of the C1 orientation surrounded by the small zigzag defect.

The ferroelectric liquid crystal display device was driven by the driving methods shown in Figs. 7 and 8. More specifically, it was driven at 25°C under the condition that V_{G1} = 10V, V_{G2} = -15V, Vₛ = 5V, t₁ = 25µsec, and n = 32, and then there was provided a preferable display whose rewriting time for one screen was 4.8msec.

### Example 7

An active matrix type ferroelectric liquid crystal display device of the structure shown in Fig. 10 was made in the same manner as in the example 3 except that the liquid crystal composite material No. 201 in the example 3 was changed to the liquid crystal composition material No. 203 and the orientation film PSI-X-A-2001 (polyimide made by Chisso Petrochemical Co., Ltd.) was changed to PVA.

It was found that the orientation of the ferroelectric liquid crystal display device was the C2 orientation at the room temperature except a region of the C1 orientation surrounded by the small zigzag defect.

The ferroelectric liquid crystal display device was driven by the driving methods shown in Figs. 7 and 8. More specifically, it was driven at 25°C under the condition that V_{G1} = 10V, V_{G2} = -15V, Vₛ = 5V, t₁ = 25µsec, and n = 40, and then there was provided a preferable display whose rewriting time for one screen was 4.8msec.

According to the present invention, there can be provided the active matrix type ferroelectric liquid crystal display device of high reliability in which capacity is large, a visual angle is large, and contrast is high.

While, only certain preferred embodiments have been described in detail, as will be apparent to those skilled in the art, certain changes and modifications can be made without departing from the scope of the invention as defined by the following claims.

## Claims

1. A method of driving a ferroelectric liquid crystal display device, the device comprising a substrate (1); a plurality of scanning electrodes (8) and a plurality of signal electrodes (6) disposed in the form of a matrix, a pixel being defined at each intersection of a scanning electrode and a signal electrode; a switching device at each intersection of the electrodes for driving an associated pixel; a liquid crystal cell containing ferroelectric liquid crystal (13), the ferroelectric liquid crystal (13) forming a liquid crystal layer of a chevron structure showing uniform orientation in which doglegged direction in the chevron structures is the same as a rubbing axis; and a drive control means; the method comprising the steps of:
a1) applying a pulse to a first scanning electrode (G1) to turn the switching elements (P_{1/1} ·· P_{1/n}) associated with the first scanning electrode ON; while
a2) concurrently applying signals to the signal electrodes (S₁, ··, Sₖ), the signal applied to each respective signal electrode having a polarity opposite to that of a signal corresponding to a required display from the pixel defined at the first scanning electrode and the respective signal electrode (6);
a3) repeating steps (a1) and (a2), in sequence, for a given number (n) of subsequent scanning electrodes;
b1) subsequently, applying a pulse to the first scanning electrode to turn the switching elements associated with the first scanning electrode ON; while
b2) concurrently applying signals to the signal electrodes, the signal applied to each respective signal electrode having the same polarity as a signal corresponding to the required display from the pixel defined at the first scanning electrode and the respective signal electrode (6);
b3) repeating steps (b1 and b2), in sequence, for said given number of subsequent scanning electrodes;
c1) subsequently, applying a pulse to the first scanning electrode to turn the switching elements associated with the first scanning electrode ON; while
c2) concurrently applying zero voltage signals to the signal electrodes; and
c3) repeating steps (c1 and c2), in sequence, for said given number of subsequent scanning electrodes.

2. A method of driving a liquid crystal display device according to claim 1 wherein said switching device is a thin film transistor.

## Patentansprüche

1. Verfahren zum Ansteuern einer ferroelektrischen Flüssigkristall-Anzeigevorrichtung, die folgendes aufweist: ein Substrat (1); eine Vielzahl von Abrasterelektroden (8) und eine Vielzahl von Signalelektroden (6), die matrixförmig angeordnet sind, wobei an jedem Schnittpunkt zwischen einer Abrasterelektrode und einer Signalelektrode ein Pixel definiert ist; einem Schaltbauteil an jedem Schnittpunkt der Elektroden, um ein zugehöriges Pixel anzusteuern; eine Flüssigkristallzelle, die einen ferroelektrischen Flüssigkristall (13) enthält, der eine Flüssigkristallschicht mit einer Winkelstruktur bildet, die gleichmäßige Ausrichtung zeigt, bei der die Knickrichtung in der Winkelstruktur mit der Reibeachse übereinstimmt; und eine Treibersteuereinrichtung; wobei das Verfahren die folgenden Schritte umfasst:
a1) Anlegen eines Impulses an eine erste Abrasterelektrode (G1), um die Schaltelemente (P_{1/1} ... P_{1/n}), die der ersten Abrasterelektrode zugeordnet sind, auf EIN zu schalten;
a2) bei gleichzeitigem Anlegen von Signalen an die Signalelektroden (S₁ ..., Sₖ), wobei das an jede jeweilige Signalelektrode angelegte Signal eine Polarität umgekehrt zu der eines Signals aufweist, das einer erforderlichen Anzeige durch das Pixel entspricht, das durch die erste Abrasterelektrode und die jeweilige Signalelektrode (6) definiert ist;
a3) Wiederholen der Schritte a1) und a2) in aufeinanderfolgender Weise für eine vorgegebene Anzahl (n) aufeinanderfolgender Abrasterelektroden;
b1) anschließendes Anlegen eines Impulses an die erste Abrasterelektrode, um die Schaltelemente, die der ersten Abrasterelektrode zugeordnet sind, auf EIN zu schalten;
b2) bei gleichzeitigem Anlegen von Signalen an die Signalelektroden, wobei das an jede jeweilige Signalelektrode angelegte Signal dieselbe Polarität wie ein Signal aufweist, das der erforderlichen Anzeige vom Pixel entspricht, das durch die erste Abrasterelektrode und die jeweilige Signalelektrode (6) definiert ist;
b3) Wiederholen der Schritte b1) und b2) in aufeinanderfolgender Weise für die vorgegebene Anzahl aufeinanderfolgender Abrasterelektroden;
c1) anschließendes Anlegen eines Impulses an die erste Abrasterelektrode, um die Schaltelemente, die der ersten Abrasterelektrode zugeordnet sind, auf EIN zu schalten;
c2) bei gleichzeitigem Anlegen von Signalen der Spannung 0 an die Signalelektroden; und
c3) Wiederholen der Schritte c1) und c2) in aufeinanderfolgender Weise für die vorgegebene Anzahl aufeinanderfolgender Abrasterelektroden.

2. Verfahren zum Ansteuern einer Flüssigkristall-Anzeigevorrichtung nach Anspruch 1, bei dem das Schaltbauteil ein Dünnfilmtransistor ist.

## Revendications

1. Procédé de commande d'un dispositif d'affichage à cristaux liquides ferroélectriques, le dispositif comprenant un substrat (1); une pluralité d'électrodes de balayage (8) et une pluralité d'électrodes de signal (6) disposées en forme de matrice, un pixel étant défini à chacune des intersections d'une électrode de balayage et d'une électrode de signal ; un dispositif de commutation à chacune des intersections d'électrodes destiné à commander un pixel associé ; une cellule de cristaux liquides contenant des cristaux liquides ferroélectriques (13), les cristaux liquides ferroélectriques (13) formant une couche de cristaux liquides présentant une structure en forme de chevron d'orientation uniforme dans laquelle la direction coudée des structures en forme de chevron est identique à celle d'un axe de polissage ; et un moyen de contrôle de commande ; le procédé comprenant les étapes consistant à :
a1) appliquer une impulsion à une première électrode de balayage (G1) afin d'activer les éléments de commutation (P_{1/1}, ···, P_{1/m}) associés à la première électrode de balayage ; et à
a2) appliquer simultanément des signaux aux électrodes de signal (S₁, ..., S_{K}), le signal appliqué à chacune des électrodes de signal respectives présentant une polarité opposée à celle d'un signal correspondant à un affichage souhaité du pixel défini sur la première électrode de balayage et l'électrode de signal respective (6) ;
a3) répéter les étapes (a1) et (a2), consécutivement, pour un nombre (n) d'électrodes de balayage consécutives ;
b1) appliquer consécutivement une impulsion à la première électrode de balayage afin d'activer les éléments de commutation associés à la première électrode de balayage ; et à
b2) appliquer simultanément des signaux aux électrodes de signal, le signal appliqué à chacune des électrodes de signal respectives étant de polarité identique à un signal correspondant à l'affichage souhaité du pixel défini sur la première électrode de balayage et l'électrode de signal respective (6) ;
b3) répéter les étapes (b1) et (b2), consécutivement, pour ledit nombre donné d'électrodes de balayage consécutives ;
c1) appliquer consécutivement une impulsion à la première électrode de balayage afin d'activer les éléments de commutation associés à la première électrode de balayage ; et à
c2) appliquer simultanément des signaux de valeurs de tension nulle aux électrodes de signal ; et
c3) répéter les étapes (c1) et (c2), consécutivement, pour ledit nombre donné d'électrodes de balayage consécutives ;

2. Procédé de commande d'un dispositif d'affichage à cristaux liquides selon la revendication 1, dans lequel ledit dispositif de commutation est un transistor à couches minces.
